Europäisches Patentamt

European Patent Office

Office européen des brevets

(11) Publication number: **0 359 322**
**A2**

# EUROPEAN PATENT APPLICATION

(21) Application number: **89202275.7**

(22) Date of filing: **11.09.89**

(51) Int. Cl.5: **G01N 30/46 , B01D 15/08**

(30) Priority: **16.09.88 GB 8821769**

(43) Date of publication of application:
**21.03.90 Bulletin 90/12**

(84) Designated Contracting States:
**CH DE FR GB IT LI NL SE**

(71) Applicant: **N.V. Philips' Gloeilampenfabrieken**
**Groenewoudseweg 1**
**NL-5621 BA Eindhoven(NL)**

(72) Inventor: **De Bokx, Pieter Klaas c/o Int.**
**Octrooibureau B.V.**
**Corporate Patents and Trademarks Prof.**
**Holstaan 6**
**NL-5656 AA Eindhoven(NL)**

(74) Representative: **Andrews, Arthur Stanley et al**
**PHILIPS ELECTRONICS Patents and Trade**
**Marks Department Centre Point New Oxford**
**Street**
**London WC1A 1QJ(GB)**

(54) **Liquid chromatography.**

(57) Liquid chromatography apparatus comprises a first separating column (17) for separating a sample into its components by the process of displacement chromatography. Selected parts of the separated sample are fed by a switching valve arrangement (18) to a further separating column (19) which is arranged to operate by displacement or elution chromatography and whose output is fed to a detector (20).

The arrangement is suitable for use when analysing a sample which contains a relatively small amount of analyte in the presence of a relatively large amount of non-analytes. It avoids the need for specific sample pre-treatment procedures.

Fig. 2.

# LIQUID CHROMATOGRAPHY

The invention relates to liquid chromatography apparatus and to methods of performing a liquid chromatographic separation.

Liquid chromatography is not only one of the most important instrumental techniques, it is also the fastest growing. Since ion chromatography became an instrumental technique, it has succeeded in acquiring a significant share of the total LC market. In the mid 1970's surface-functionalised ion-exchange resins and chemical suppression of the background conductivity was introduced and was the technology on which much of the present day ion chromatography is based.

Since the early 1980's non-suppressed ion chromatography systems have been marketed using low-conductivity eluents and low-capacity resins. This has made it possible to avoid the use of the suppressor cell.

The determination of small amounts of analytes in the presence of large amounts of non-analytes (the matrix) is a very general analytical problem. As in many cases detection systems are not insensitive to the presence of the matrix, one very often resorts to removal of the matrix prior to measurement. This is more often than not a very tedious and time consuming affair. In ion chromatography, where one has a universal detector, any contamination of peaks will lead to erroneous analytical results.

A number of instances where matrix effects cause a problem in ion chromatographic analyses are listed below.

| 1) Industrial | | |
|---|---|---|
| a) | $CN^-$ in plating baths | (anion present) |
| b) | anions in samples diclosed by acid digest | (acid anion) |
| c) | $CN^-$, $Br^-$, $PO_4^{3-}$, $SO_4^{2-}$ in HF e ching baths | $(F^-)$ |
| 2) Environmental | | |
| a) | $Br^-$ etc. in sea water | $(CR^-)$ |
| b) | $K^+$ etc. in sea water | $(Na^+)$ |
| c) | $SO_4^{2-}$, $NO_3^-$ in soil extracts extracted using LiCl | $(Cl^-)$ |
| 3) Biological | | |
| a) | organic acids in biological fluids | $(Cl^-)$ |
| b) | $Li^+$ in blood | $(Na^+, K^+)$ |
| c) | $Sr^{3+}$ in biological fluids | $(Na^+, K^+, Ca^{2+})$ |
| 4) Foodstuffs | | |
| a) | $NO_2^-$, $NO_3^-$ in foodstuffs (sausages) | $(Cl^-)$ |
| b) | $NO_2^-$, $NO_3^-$ in soft drinks | $(PO_4^{3-})$ |

Several suggestions have been made to resolve specific problems, e.g. a $Cl^-$ matrix in an anion sample can be removed by precipitation with $Ag^+$ (see for example Dionex, Technical Note 14, 1982) and a $F^-$ matrix can be removed by complexation with rare-earth metals. Matrix-removal techniques such as the ones suggested above suffer from several drawbacks. First, they are not sufficiently selective. Precipitating $Cl^-$ with $Ag^+$ will lead to the loss of $Br^-$ in the sample. Secondly, when column methods are used to facilitate the separation of the precipitate/complex from the sample, this will lead to a large dilution of the sample.

It is an object of the invention to enable the provision of methods of and apparatus for the analysis of samples comprising a relatively small amount of analyte in the presence of a relatively large amount of non-analytes (the matrix) which mitigates the problems discussed hereinbefore.

The invention provides a method of analysing a sample comprising a relatively small amount of analyte in the presence of a relatively large amount of non-analyte by means of liquid chromatography comprising the steps of separating the sample components by means of displacement chromatography, discarding at least the majority of the part of the separated sample which comprises non-analyte components, and subsequently chromatographically analysing the remainder of the separated sample.

2

This provides a method which is generally applicable, i.e. can be used for a variety of samples such as those listed hereinbefore, has high selectivity, does not lead to dilution of the analytes in the sample, and can be automated. The method according to the invention can be regarded as a form of two-dimensional chromatography.

The remainder of the separated sample may be analysed by elution chromatography. The separation properties of the combination result from the different concentration-time distributions of the different modes of chromatography.

The invention further provides liquid chromatography apparatus for analysing a sample comprising a relatively small amount of analyte in the presence of a relatively large amount of non-analyte comprising means for performing a displacement chromatographic separation including a first separating column, means for discarding at least the majority of the non-analyte components separated, means for feeding the remainder of the separated components to a second separating column and detector means to enable quantification of the separated analyte components. The second separating column may be arranged to perform an elution chromatographic separation.

The discarding means may comprise a first switching valve arrangement controlled to feed the non-analyte components to waste. The feeding means may comprise a second switching valve arrangement controlled to connect the outlet of the first separating column to the inlet of the second separating column when the effluent from the first column includes analyte components. The first and second switching valve arrangements may be combined as a single switching valve arrangement.

An embodiment of the invention will now be described, by way of example, with reference to the accompanying drawings, in which:-

Figure 1 shows diagrammatically the process of displacement chromatography, and

Figure 2 shows in block schematic form an embodiment of liquid chromatograpy apparatus according to the invention.

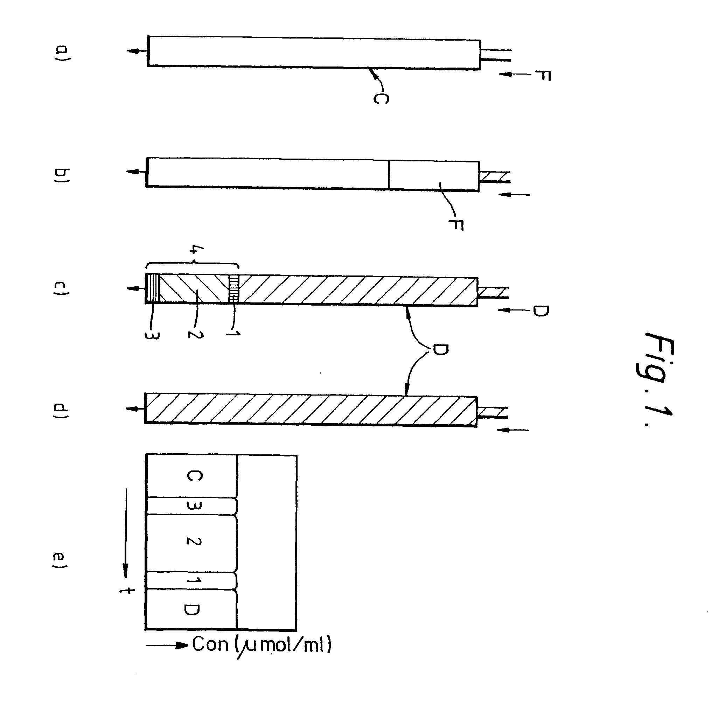

Figure 1 illustrates the process of displacement chromatography. As shown in Figure 1a) a column is equilibrated with an eluent (carrier C) having a weaker affinity to the stationary phase than any of the analytes. The sample (feed F) is then introduced onto the column as shown in Figure 1b). An eluent (displacer D) having a stronger affinity to the stationary phase than any of the analytes is then fed to the column as shown in Figure 1c). As the sample is enclosed between the carrier and displacer it is not separated into separate peaks as in elution chromatography but travels through the column as one band. If the column is sufficiently long the various components will arrange themselves according to their respective affinities. The state of complete separation within the sample band is called the isotachic train. The bracketed portion 4 in Figure 1c) shows the components of the sample separated into the isotachic train, i.e. The components 1 to 3 ordered according to their affinities to the stationary phase. The concentrations of the analytes in the isotachic train are governed by the type and concentration of the displacer. Consequently, unlike in elution chromatography, the analytes are not diluted but can be concentrated many times. After the displacement separation, the matrix component (component 2 in Figure 1) can, by standard heart cutting procedures, be led to waste while the sample components (1 and 3 in Figure 1) are chromatographically separated in a further column using the displacement mode or the elution mode for accurate quantitation. Figure 1d) illustrates the situation where all the sample (feed) components have exited the column which is now filled with the displacer and Figure 1e) shows a displacement chromatogram illustrating the chromatographic separation achieved by displacement chromatography, wherein concentration Con in $\mu$ mol/ml is shown as a function of time t. The column will subsequently be prepared for a further separation by passing a regenerant through it.

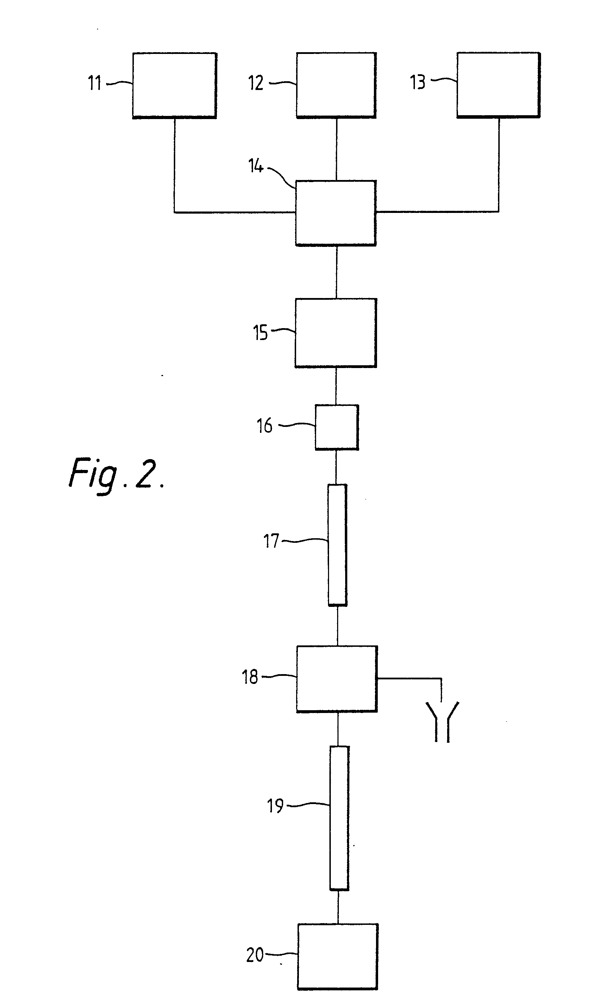

Figure 2 shows an embodiment of chromatography apparatus according to the invention which comprises three containers 11, 12, and 13 for the carrier, the displacer, and a regenerator. The containers 11 to 13 are connected to a switching valve arrangement 14 which selectively connects the containers to the inlet of a pump 15. The outlet of the pump 15 is coupled to the inlet of a separating column 16 via a sample injector 17. The outlet of the column 16 is connected via a further switching valve arrangement 18 either to waste or to the inlet of a further separating column 19 whose outlet is fed to a detector 20.

In operation the column 16 is initially equilibrated by passing the carrier solution through it by appropriate switching of the valve arrangement 14. The valve arrangement 14 is then controlled so that the displacer container is coupled to the pump inlet and a sample is applied to the sample injector 17 which may take the form of a sample loop which is flushed by the displacer liquid. In this way the sample is enclosed between the carrier and displacer and a displacement separation is produced. The switching arrangement 18 is controlled so that the effluent from the column 16 is directed to waste until those analytes which the analyst wishes to quantify are present at the outlet of the column 16 when it is then directed to the inlet of the analytical column 19. Thus the carrier and displacer are directed to waste as is

EP 0 359 322 A2

the majority of the interfering matrix, i.e. when considering Figure 1e) the effluent from the column 16 is switched to waste for the component 2 and to the inlet of column 19 for components 1 and 3.

The valve arrangement 18 may be simply operated by a timer if the time of elution of the various components of the sample from the column 17 can be calculated. Otherwise a further detector can be utilised at the outlet of the column 17 and its output used to control the operation of the valve arrangement 18.

In practice there is some overlap of the components leaving the column 16 and the ideal separation shown in Figure 1e) is degraded. However elution chromatography can generally cope with up to a tenfold excess of the matrix without difficulty and consequently non-ideal separation by the displacement column 17 or some inaccuracy in the operation of the valve arrangement 18 can be tolerated provided that it is ensured that the sample is directed to the column 19 for at least the total time the analyte components are present.

As an alternative instead of using the switching valve arrangement 18 to direct the effluent from the column 16 directly to the column 19 the effluent from column 16 could be collected in a fraction collector and then separately injected into the column 16 either manually or by means of an autosampler arrangement.

In a further alternative, the analytical column 19 is also operated in the displacement mode so that its inherent advantages regarding detection limits in appropriate cases can be utilised. Thus any mode of chromatographic separation may be used in the second column for the final separation of the analytes.

From reading the present disclosure, other modifications will be apparent to persons skilled in the art. Such modifications may involve other features which are already known in the design and use of chromatography apparatus or methods of performing chromatographic separations and components parts thereof and which may be used instead of or in addition to features already described herein. Although claims have been formulated in the application to particular combinations of features, it should be understood that the scope of the disclosure of the present application also includes any novel feature or any novel combination of features disclosed herein either explicitly or implicitly or any generalisation of one or more of those features which would be obvious to persons skilled in the art, whether or not it relates to the same invention as presently claimed in any claim and whether or not it mitigates any or all of the same technical problems as does the present invention. The applicants hereby give notice that new claims may be formulated to such features and/or combinations of such features during the prosecution of the present application or of any further application derived therefrom.

## Claims

1. A method of analysing a sample comprising a relatively small amount of analyte in the presence of a relatively large amount of non-analyte by means of liquid chromatography comprising the steps of separating the sample components by means of displacement chromatography, discarding at least the majority of the part of the separated sample which comprises non-analyte components, and subsequently chromatographically analysing the remainder of the separated sample.

2. A method of analysing a sample as claimed in Claim 1, in which the remainder of the separated sample is analysed by elution chromatography.

3. Liquid chromatography apparatus for analysing a sample comprising a relatively small amount of analyte in the presence of a relatively large amount of non-analyte comprising means for performing a displacement chromatographic separation including a first separating column, means for discarding at least the majority of the non-analyte components separated, means for feeding the remainder of the separated components to a second separating column and detector means to enable quantification of the separated analyte components.

4. Liquid chromatography apparatus as claimed in Claim 3, in which the second separating column is arranged to perform an elution chromatographic separation.

5. Liquid chromatography apparatus as claimed in Claim 3 or Claim 4, in which the discarding means comprises a first switching valve arrangement controlled to feed the non-analyte components to waste.

6. Liquid chromatography apparatus as claimed in any of Claims 3 to 5, in which the feeding means comprises a second switching valve arrangement controlled to connect the outlet of the first separating column to the inlet of the second separating column when the effluent from the first column includes analyte components.

7. Liquid chromatography apparatus as claimed in Claim 6 when dependent on Claim 5, in which the first and second switching valve arrangements are combined as a single switching valve arrangement.

4

# Fig.1.

a)   b)   c)   d)   e)

1-II-PHQ 88035

Fig. 2.